# EUROPEAN PATENT APPLICATION

(11) **EP 3 238 891 A1**
(43) Date of publication of application: **01.11.2017**
(21) Application number: 15873374.1
(22) Date of filing: 26.12.2015
(51) Int. Cl.: B25J 18/02, F16G 13/20, F16H 19/02

(54) **ROBOT ARM MECHANISM AND LINEARLY MOVING EXTENDABLE MECHANISM**

(30) Priority: 27.12.2014 JP 2014266872
(71) Applicant: Life Robotics Inc., Koto-ku Tokyo 135-0047 (JP)
(72) Inventor: YOON Woo-Keun, Tokyo 135-0047 (JP); KURIHARA Shinji, Tokyo 135-0047 (JP); SANO Hikaru, Tokyo 135-0047 (JP)
(74) Representative: Herrero & Asociados, S.L.
(86) International application number: PCT/JP2015/086447
(87) International publication number: WO 2016/104806

(57) **Abstract**

A purpose is to improve storability of a plurality of connection pieces coupled together bendably. A robot arm mechanism includes a rotary joint and a linear extension and retraction joint (J3). The linear extension and retraction joint includes a plurality of first connection pieces (23) coupled together bendably and provided with a hollow square cross section and a plurality of second connection pieces (22) coupled together bendably and each shaped like a flat plate. The first connection pieces are joined to the second connection pieces in upper part of the first connection pieces, thereby forming a columnar body (2) by constraining bending. The columnar body is relaxed when the first connection pieces and the second connection pieces are separated from each other. An ejection section (32) forms the columnar body by joining the first connection pieces to the second connection pieces and supports the columnar body. The plurality of first connection pieces are coupled together at an upper part and a lower part of each piece to be folded in a zigzag pattern and stored in a base (1) with top faces of adjacent first connection pieces folded on top of each other and bottom faces of adjacent first connection pieces folded on top of each other alternately.

## Description

### FIELD

Embodiments described herein relate generally to a robot arm mechanism and a linear extension and retraction mechanism.

### BACKGROUND

Vertical articulated robot arm mechanisms require three degrees of positional freedom (x, y, z) and three degrees of postural freedom (φ, θ, ψ). Because translation of a hand requires the joints J1, J2, and J3 to rotate in coordination, movement of the joint J2 called an elbow, in particular, is very large and unpredictable, making it inevitable that the movement of the elbow becomes very fast especially around a singular point. Effective measures for securing six degrees of freedom without using an elbow joint include adoption of a linear extension and retraction mechanism. The linear extension and retraction mechanism is characterized by a wider range of linear motion than conventional linear-motion mechanisms. The linear extension and retraction mechanism includes a plurality of connection pieces coupled bendably, sends the connection pieces as a columnar body out of a hollow support body by constraining movement of the columnar body, then pulls back the connection pieces by restoring bendability, and stores the connection pieces in the hollow support body.

### BRIEF DESCRIPTION OF THE INVENTION

A purpose of the present embodiment is to improve storability of a plurality of connection pieces coupled bendably.

A robot arm mechanism according to an embodiment of the present invention comprises a revolute joint and a linear extension and retraction joint. The linear extension and retraction joint includes a plurality of first connection pieces coupled bendably and provided with a hollow square cross section and a plurality of second connection pieces coupled bendably and each shaped like a flat plate. The second connection pieces are overlapped on the first connection pieces in upper part of the first connection pieces, thereby forming a columnar body 2 by constraining bending. The columnar body is released when the first connection pieces and the second connection pieces are separated from each other. An ejection section 32 forms the columnar body by joining the first connection pieces to the second connection pieces and supports the columnar body. The plurality of first connection pieces are coupled at an upper part and a lower part of each piece to be folded in a zigzag pattern and stored in a base 1 with top faces of adjacent first connection pieces folded on top of each other and bottom faces of adjacent first connection pieces folded on top of each other alternately.

### BRIEF DESCRIPTION OF THE VIEWS OF THE DRAWINGS

FIG. 1 is an external perspective view of a robot arm mechanism according to a first embodiment;
FIG. 2 is a diagram showing the robot arm mechanism of FIG. 1 using graphic symbol representation;
FIGS. 3A and 3B are side views of the robot arm mechanism of FIG. 1;
FIG. 4 is a side view showing an internal structure of the robot arm mechanism of FIG. 1;
FIG. 5 is a side view of a robot arm mechanism according to a second embodiment;
FIG. 6 is a plan view showing an internal structure of the robot arm mechanism of FIG. 5;
FIG. 7 is a side view showing an internal structure of a robot arm mechanism according to a third embodiment; and
FIG. 8 is a side view showing an internal structure of a variation of the robot arm mechanism of FIG. 7.

### DETAILED DESCRIPTION

A robot arm mechanism according to embodiments of the present invention is described below with reference to the drawings.

### (First embodiment)

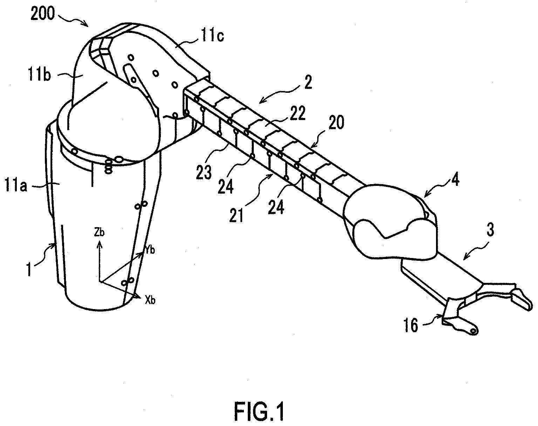

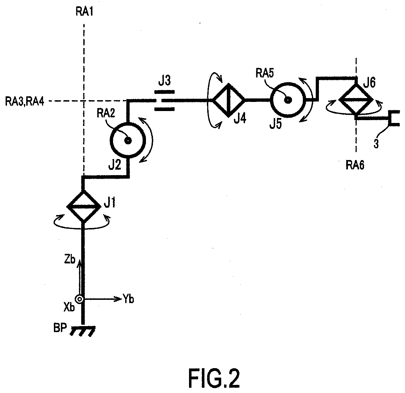

As shown in FIGS. 1 and 2, a robot arm mechanism 200 is configured as a so-called vertical articulated robot arm mechanism and includes a base 1 substantially cylindrical in shape and an arm section 2 supported by the base 1. An end effector 3 is attached to a tip of the arm section 2. A hand section capable of gripping an object is shown in FIG. 1 as the end effector 3. The end effector 3 is not limited to the hand section, and may be another tool, a camera, or a display. An adaptor may be attached to the tip of the arm section 2 to allow the end effector 3 to be replaced with any type of end effector 3.

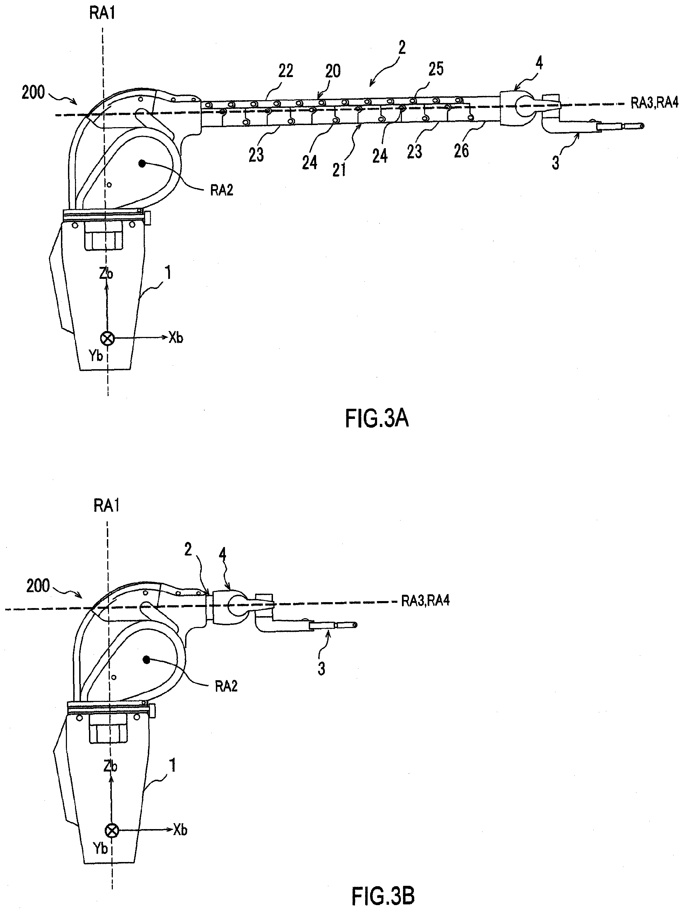

The arm section 2 has a plurality of--six herein--joints J1, J2, J3, J4, J5, and J6. The plurality of joints J1, J2, J3, J4, J5, and J6 are arranged in order from the base 1. Generally, first, second, and third axes RA1, RA2, and RA3 are called root three axes, and fourth, fifth, and sixth axes RA4, RA5, and RA6 are called wrist three axes. The joints J4, J5, and J6 constituting the wrist three axes are stored in a wrist section 4. At least one of the joints J1, J2, and J3 constituting the wrist three axes is a linear motion joint. Here, the third joint J3 is a linear motion joint and is configured to be a linear extension and retraction joint with a relatively long extension and retraction distance, in particular. FIG. 3A shows a maximally extended state and FIG. 3B shows a maximally retracted state.

The first joint J1 is a torsion joint (revolute joint) that has the first axis of rotation RA1 which is held, for example, perpendicularly to a base plane. The second joint J2 is a bending joint (revolute joint) that turns on the second axis of rotation RA2 perpendicular to the first axis of rotation RA1. The arm section 2 turns together with the hand section 3 in accordance with torsional rotation of the first joint J1. The arm section 2 pivots up and down on the second axis of rotation RA2 of the second joint J2 together with the hand section 3 in accordance with bending rotation of the second joint J2. The third joint J3 extends and retracts linearly along the third axis (axis of movement) RA3 perpendicular to the second axis of rotation RA2. The fourth joint J4 is a torsion joint that turns on the fourth axis of rotation RA4 which matches the third axis of movement RA3. The fifth joint J5 is a bending joint that turns on the fifth axis of rotation RA5 orthogonal to the fourth axis of rotation RA4. The sixth joint J6 is a bending joint that turns on the sixth axis of rotation RA6 orthogonal to the fourth axis of rotation RA4 and perpendicular to the fifth axis of rotation RA5.

The arm support body (first support body) 11a forming the base 1 has a cylindrical hollow structure formed around the axis of rotation RA1 of the first joint J1. When the first joint J1 rotates, the first support body 11a axially rotates in accordance with the turn of the arm section 2. Note that the first support body 11a may be fixed on a ground plane. In this case, the arm section 2 turns independently of the first support body 11a. The second support body 11b is connected to the upper part of the first support body 11a.

The second support body 11b has a hollow structure continuous with the first support body 11a. One end of the second support body 11b is attached to a rotating section of the first joint J1. The other end of the second support body 11b is open, and a third support body 11c is fitted therein vertically pivotally on the axis of rotation RA2 of the second joint J2. The third support body 11c has a scaly hollow structure communicating with the first support body 11a and the second support body 11b. In accordance with bending rotation of the second joint J2, a rear part of the third support body 11c is stored in and sent out from the second support body 11b. The rear part of the third joint J3, which constitutes a linear motion joint of the arm section 2, is stored inside the continuous hollow structure of the first support body 11a and the second support body 11b by retraction thereof.

The first joint J1 includes an annular fixed section and a rotating section, and is fixed to a base (not shown) in the fixed section. The first support body 11a and the second support body 11b are attached to the rotating section. When the first joint J1 rotates, the first support body 11a, the second support body 11b and the third support body 11c turn around the first axis of rotation RA1 together with the arm section 2 and the hand section 3.

A lower part of a rear end of the third support body 11c is fitted in a lower part of an open end of the second support body 11b pivotally on the axis of rotation RA2. Consequently, the second joint J2 is configured as a bending joint that turns on the axis of rotation RA2. When the second joint J2 pivots, the arm section 2 pivots vertically, i.e., pivots up and down, on the axis of rotation RA2 of the second joint J2 together with the hand section 3.

As described above, the third joint J3 serving as a joint section constitutes a main constituent of the arm section 2. The hand section 3 described above is provided at the tip of the arm section 2. A two-fingered hand 16 of the hand section 3 can be moved to any given position through rotation, bending, and extension and retraction of the first to sixth joints J1 to J6. In particular, a linear extension and retraction distance of the third joint J3 enables the hand section 3 to act on an object in a wide range from a position close to the base 1 to a position far from the base 1. Because the arm section 2 of the linear extension and retraction mechanism according to the present embodiment does not have an elbow joint, motion space of the arm section 2 can be simplified to a sector shape having as its radius a maximum length of the arm section 2 attributable to linear extendibility and retractability of the linear motion joint J3.

The third joint J3 is characterized by the linear extension and retraction distance realized by the linear extension and retraction mechanism constituting the third joint J3. The linear extension and retraction mechanism includes a first connection piece string 21 and a second connection piece string 20. The first connection piece string 21 is made up of a plurality of first connection pieces 23 of the same shape and the same size. The first connection piece 23 is configured as a relatively short tubular body (square tubular body) having rectangular side faces and a hollow square cross section. The plurality of first connection pieces 23 are coupled bendably along a longitudinal direction of the side faces by being connected with each other by pins 24 alternately on upper edges of end faces and on lower edges of end faces. The plurality of first connection pieces 23 are coupled at diagonal positions of the side faces. Each pair of successive first connection pieces 23 coupled by the pin 24 on the upper edges of the end faces is constrained from bending downward due to interference between the end faces of the connection pieces while being bendable upward. Each pair of successive first connection pieces 23 coupled by the pin 24 on the lower edges of end faces is constrained from bending upward similarly due to interference between the end faces of the connection pieces while being bendable downward.

The second connection piece string 20 is made up of a plurality of second connection pieces 22 each having a substantially flat plate shape and a width substantially equivalent to that of the first connection piece 23. The plurality of second connection pieces 22 are coupled in a bendable state by pins 25, forming a string. The leading first connection piece 23 of the first connection piece string 21 and the leading second connection piece 22 of the second connection piece string 20 are connected to a head piece 26. Upper part of the head piece 26 shaped as a rectangular parallelepiped protrudes by 1/2 the length of each of the first and second connection pieces 23 and 22 such that respective coupling positions with the overlapped first connection piece 23 and second connection piece 22 will be shifted from each other by 1/2 the length of each of the first and second connection pieces 23 and 22. When the first and second connection piece strings 21 and 20 are sent out from the third support body 11c with the head piece 26 serving as a leading piece, the first and second connection piece strings 21 and 20 are overlapped each other. When the first and second connection piece strings 21 and 20 are kept overlapped, the first connection piece string 21 and the second connection piece string 20 are constrained from bending. Consequently, a columnar body having a certain degree of rigidity is formed by the first and second connection piece strings 21 and 20. When the first connection piece string 21 and the second connection piece string 20 are separated from each other, the columnar body is returned the first and second connection piece strings 21 and 20 to a bendable state.

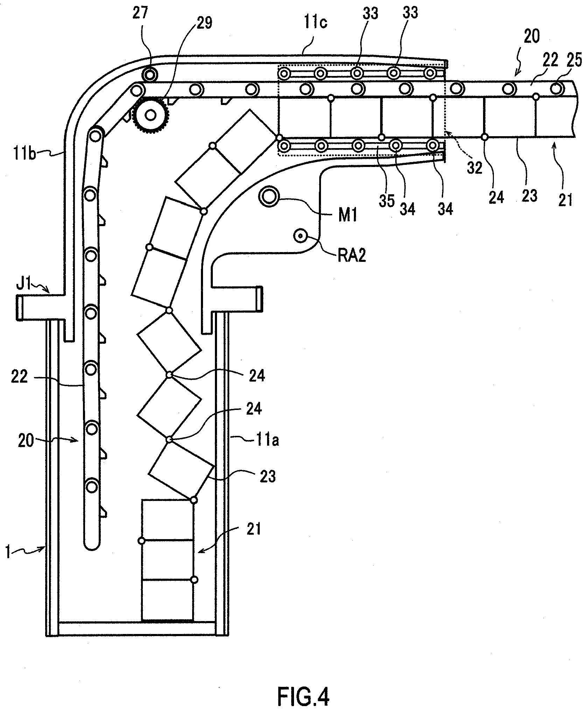

As shown in FIG. 4, the first connection piece string 21 and the second connection piece string 20 are overlapped in the ejection section 32 mounted near an opening in the third support body 11c. The ejection section 32 is made up of a plurality of upper rollers 33 and a plurality of lower rollers 34 as well as non-illustrated side rollers, all of which are supported by a frame 35 of a rectangular tubular shape. The plurality of upper rollers 33 are arranged along a center axis of the arm at intervals substantially equivalent to the length of the second connection piece 22. Similarly, the plurality of lower rollers 34 are arranged along the center axis of the arm at intervals substantially equivalent to the length of the first connection piece 23. The second connection piece string 20 is guided in a posture parallel to the center axis of the arm by a pair of guide roller 27 and drive gear 29 placed behind the ejection section 32. The drive gear 29 is connected with a drive shaft of a motor (not shown) via a speed reducer. A linear gear is formed on a surface of a bottom plate of the second connection piece string 20, making up a rack-and-pinion mechanism in conjunction with the drive gear 29. Rotary motion of the motor is transmitted to the second connection piece string 20 via the rack-and-pinion mechanism and the second connection piece string 20 is sent into the ejection section 32 or pulled back from the ejection section 32, together with the first connection piece string 21.

The first connection piece string 21 is guided to the ejection section 32 by the guide rail (not shown) placed behind the ejection section 32. The first connection piece string 21 and the second connection piece string 20 are inserted between the upper rollers 33 and the lower rollers 34 by pressing against each other. The ejection section 32 joins the first connection piece string 21 and the second connection piece string 20, thereby forming the columnar body and supports the columnar body from above, below, left, and right. The columnar body formed when the first connection piece string 21 and the second connection piece string 20 are overlapped is sent out linearly along the third axis of movement RA3.

As described above, the first connection pieces 23 are coupled bendably by being connected with each other, for example, with the pins 24 alternately on the upper edges of the end faces and on the lower edges of the end faces. Specifically, a rear end of a top face of a first connection piece 23 (denoted by A) of a rectangular tubular shape and a front end of a top face of an immediately succeeding first connection piece 23 (denoted by B) are connected with each other bendably by a pin 24. A rear end of a bottom face of the first connection piece 23 (B) and a front end of a bottom face of an immediately succeeding first connection piece 23 (denoted by C) are connected with each other bendably by a pin 24. The pair of successive first connection pieces 23 (A and B) whose top faces are connected with each other is bendable upward, but does not bend downward because of interference between the end faces of the pair of successive first connection pieces 23. Conversely, the pair of successive first connection pieces 23 (B and C) whose bottom faces are connected with each other is bendable downward but does not bend upward because of interference between the end faces of the pair of successive first connection pieces 23. When rotated 180 degrees on the pin 24, the pair of successive first connection pieces 23 (A and B) coupled in upper part have their top faces contacted together. When rotated 180 degrees on the pin 24, the pair of successive first connection pieces 23 (B and C) coupled in lower part have their bottom faces contacted together.

The first connection piece string 21 can be stored in the base 1 by being folded in a zigzag pattern with the top faces of adjacent first connection pieces 23 folded on top of each other and with the bottom faces of adjacent first connection pieces 23 folded on top of each other alternately. Since the first connection piece 23 is configured as a tubular body having rectangular side faces and a hollow square cross section, when the first connection piece string 21 is stored in the base 1 by being folded on top of each other as described above, length of space required to store the first connection piece string 21 can be reduced compared to when the first connection piece string 21 is stored as it is in an extended state.

### (Second embodiment)

In the first embodiment described above, the length of storage space for the first connection piece string 21 is reduced by storing the first connection piece string 21 in a folded state. A structure used to reduce the length of the storage space is not limited to this. The second embodiment achieves reduction in the length of the storage space by winding up the first connection piece string 21.

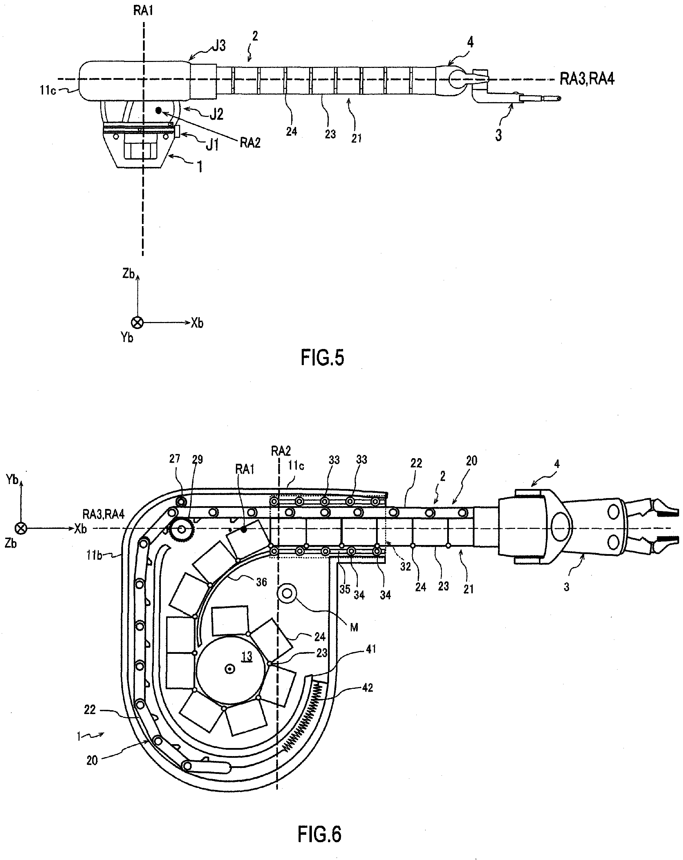

FIG. 5 shows a side view of a robot arm mechanism according to a second embodiment. FIG. 6 is a plan view showing an internal structure of the robot arm mechanism of FIG. 5. Whereas in the first embodiment, the first connection piece string 21 and the second connection piece string 20 are overlapped in a longitudinal direction (direction of the first axis of rotation (turning axis) RA1 of the first joint J1) of the robot arm mechanism (vertical articulated robot arm mechanism), in the second embodiment, the first and second connection piece strings 21 and 20 are overlapped in a lateral direction (direction of the second axis of rotation RA2). Also, whereas in the first embodiment, the first connection piece string 21 and the second connection piece string 20 are stored longitudinally in a substantially cylindrical first support body 11a, in the second embodiment, the first and second connection piece strings 21 and 20 are stored laterally in a second support body 11b.

According to the second embodiment, the second support body 11b is a box-shaped body resulting from a combination of a semicircle and a quadrangle and is supported on the first support body 11a rotatably, i.e., sweepably and vertically pivotally around the first and second axes of rotation RA1 and RA2, allowing the arm section 2 to sweep and pivot together with the second support body 11b. Typically the second support body 11b is placed relative to the first support body 11a in such a way that the first axis of rotation RA1 will be located on the center axes of the arm (RA3 and RA4).

A circular or polygonal reel 13 used to wind up the first connection piece string 21 on a bending side (designated as an inner side) is housed in the second support body 11b. A guide rail 36 adapted to guide the first connection piece string 21 is provided between the reel 13 and ejection section 32. A rearmost one of the plurality of first connection pieces 23 making up the first connection piece string 21 is connected to a circumferential surface of the reel 13.

The rotating shaft of the reel 13 is placed in a direction orthogonal to the second axis of rotation RA2 and the third axis of movement (center axis of the arm) RA3, i.e., in the longitudinal direction to wind up the first connection piece string 21 sideways. Rotation of the reel 13 is driven by a motor M. Typically the motor M is used as a common actuator to drive both the reel 13 and the drive gear 29, which is intended for arm extension and retraction at the third joint J3. The rotating shaft of the reel 13 is connected to a drive shaft of the motor M via a speed reducer or a belt mechanism, and a speed reduction ratio between the rotating shaft and drive shaft is adjusted such that the first connection piece string 21 will be fed and wound up according to arm extension and retraction speed of the third joint J3.

An inner wall of the second support body 11b is arc-shaped. The second connection piece string 20 pulled back into the second support body 11b by backward rotation of the drive gear 29 is stored in storage space between the inner wall of the second support body 11b and a guide rail 41 inside the second support body 11b by being biased by a coil spring 42. The guide rail 41, which is made up of a substantially straight portion and an arc-shaped portion and laid from the drive gear 29 to a termination of the arc-shaped inner wall portion of the second support body 11b, suitably prevents the first connection piece string 21 and the second connection piece string 20 separated behind the ejection section 32 from tangling with each other. The second connection piece string 20 is stored in the second support body 11b by being curled up into an arc on an outer side of the first connection piece string 21 on the same side of the center axis of the arm (axis of movement RA3) as the first connection piece string 21. Ideally, the second connection piece string 20 is stored concentrically with the first connection piece string 21.

In this way, since the first connection piece string 21 is wound up and stored laterally inside the second support body 11b and the second connection piece string 20 is stored inside the second support body 11b as well by being rounded into an arc shape toward the same side as the first connection pieces 23, the length of the storage space can be reduced in the longitudinal direction more greatly than the first embodiment. By joining together the first and second connection piece strings 21 and 20 in the lateral direction, longitudinal withstand load can be improved.

### (Third embodiment)

In the second embodiment described above, the first connection piece string 21 is wound up and stored laterally inside the second support body 11b and the second connection piece string 20 is stored inside the second support body 11b as well by being bent toward the same side as the first connection pieces 23, and thereby the length of the storage space is reduced greatly in the longitudinal direction, but the winding direction is not limited to this.

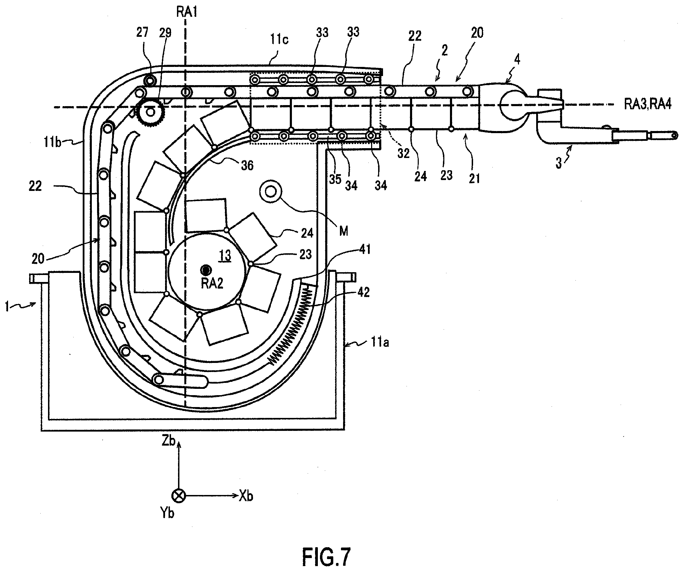

As shown in FIG. 7, in a third embodiment as with the second embodiment, the second support body 11b is a flat box-shaped body resulting from a combination of a semicircle and a quadrangle and is supported sweepably and vertically pivotally on the first support body 11a. According to the third embodiment, to wind up the first connection piece string 21 in the longitudinal direction, the rotating shaft of the reel 13 is oriented in a direction orthogonal to the first axis of rotation RA1 and placed parallel to the second axis of rotation RA2. Typically the first and second support bodies 11a and 11b are configured such that the rotating shaft of the reel 13 will coincide with the axis of rotation RA2 of the second joint J2 and that the axis of rotation RA1 of the first joint J1 will pass behind the rotating shaft of the reel 13 rather than coinciding with the rotating shaft of the reel 13.

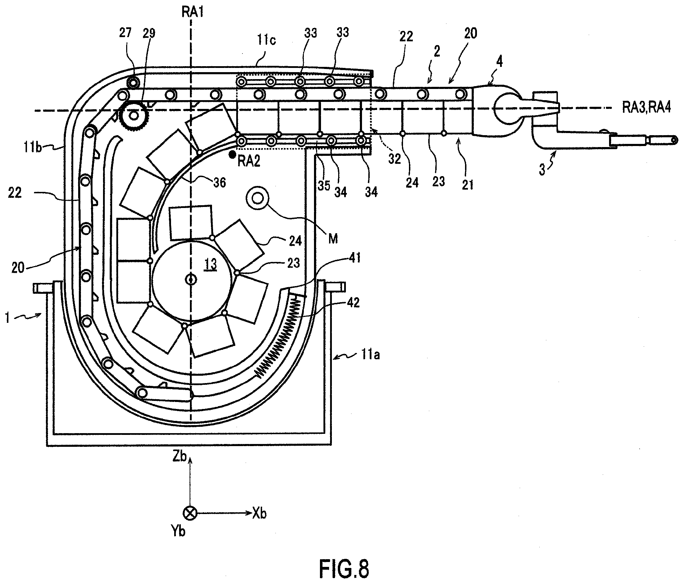

Note that the first and second support bodies 11a and 11b may be configured such that the rotating shaft of the reel 13 will be located on the axis of rotation RA1 of the first joint J1 and that the axis of rotation RA2 of the second joint J2 will be located below a rear end of the ejection section 32 as shown in FIG. 8.

In this way, since the first connection piece string 21 is wound up and stored longitudinally inside the second support body 11b and the second connection piece string 20 is stored inside the second support body 11b as well by being bent toward the same side as the first connection pieces 23 and being rounded into an arc shape, the length of the storage space can be reduced in the longitudinal direction more greatly than the first embodiment and a lateral spread of the second support body 11b can be reduced more greatly than the second embodiment.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A robot arm mechanism including a revolute joint and a linear extension and retraction joint, wherein:
the linear extension and retraction joint includes
a plurality of first connection pieces coupled bendably and provided with a hollow square cross section,
a plurality of second connection pieces coupled bendably and each shaped like a flat plate, a foremost one of the second connection pieces being connected with a foremost one of the first connection pieces, the second connection pieces being overlapped on the first connection pieces, thereby a columnar body constrained bending being formed, the columnar body being released when the first connection pieces and the second connection pieces are separated from each other; and
an ejection section adapted to form the columnar body by joining the second connection pieces on the first connection pieces and support the columnar body;
wherein the first connection pieces are coupled at an upper part and a lower part of each piece to be folded in a zigzag pattern and stored in a base with top faces of adjacent first connection pieces folded on top of each other and bottom faces of adjacent first connection pieces folded on top of each other alternately.

2. A robot arm mechanism comprising a revolute joint and a linear extension and retraction joint, wherein:
the linear extension and retraction joint includes
a plurality of connection pieces coupled bendably and provided with a hollow square cross section, the connection pieces being adapted to form a columnar body when constrained from bending, and
an ejection section adapted to form the connection pieces into the columnar body and support the columnar body;
wherein the connection pieces are coupled at an upper part and a lower part of each piece to be folded in a zigzag pattern and stored in a base with top faces of adjacent connection pieces folded on top of each other and bottom faces of adjacent connection pieces folded on top of each other alternately.

3. A robot arm mechanism comprising a plurality of joints, wherein:
the plurality of joints include a first revolute joint having a first axis of rotation, a second revolute joint having a second axis of rotation and a linear extension and retraction joint having the third axis of linear movement;
the linear extension and retraction joint includes a plurality of first connection pieces coupled bendably and provided with a hollow square cross section,
a plurality of second connection pieces coupled bendably and each shaped like a flat plate, a foremost one of the second connection pieces being connected with a foremost one of the first connection pieces, the second connection pieces being overlapped on the first connection pieces, thereby a columnar body constrained bending being formed, the columnar body being released when the first connection pieces and the second connection pieces are separated from each other;
an ejection section adapted to form the columnar body by joining the second connection pieces on the first connection pieces and support the columnar body; and
a winding section adapted to wind up the plurality of first connection pieces around a shaft orthogonal to the second axis and the third axis.

4. A robot arm mechanism comprising a plurality of joints, wherein:
the plurality of joints include a first revolute joint having a first axis of rotation, a second revolute joint having a second axis of rotation and a linear extension and retraction joint having the third axis of linear movement;
the linear extension and retraction joint includes a plurality of first connection pieces coupled bendably and provided with a hollow square cross section,
a plurality of second connection pieces coupled bendably and each shaped like a flat plate, a foremost one of the second connection pieces being connected with a foremost one of the first connection pieces, the second connection pieces being overlapped on the first connection pieces, thereby a columnar body constrained bending being formed, the columnar body being released when the first connection pieces and the second connection pieces are separated from each other;
an ejection section adapted to form the columnar body by joining the second connection pieces on the first connection pieces and support the columnar body; and
a winding section adapted to wind up the plurality of first connection pieces around the second axis.

5. A robot arm mechanism comprising a revolute joint and a linear extension and retraction joint, wherein
the linear extension and retraction joint includes
a plurality of connection pieces coupled bendably and provided with a hollow square cross section, the plurality of connection pieces being adapted to form a columnar body when constrained from bending,
an ejection section adapted to form the connection pieces into the columnar body and support the columnar body, and
a winding section adapted to wind up the plurality of connection pieces around a shaft orthogonal to a center axis of the columnar body.

6. A linear extension and retraction mechanism comprising:
a plurality of first connection pieces coupled bendably and provided with a hollow square cross section; and
a plurality of second connection pieces coupled bendably and each shaped like a flat plate, a foremost one of the second connection pieces being connected with a foremost one of the first connection pieces, the second connection pieces being overlapped on the first connection pieces in upper part of the first connection pieces, thereby a columnar body being formed, the columnar body being released when the first connection pieces and the second connection pieces are separated from each other; and
an ejection section adapted to form the columnar body by joining the first connection pieces to the second connection pieces and support the columnar body,
wherein the first connection pieces are coupled at an upper part and a lower part of each piece to be folded in a zigzag pattern and stored in a base with top faces of adjacent first connection pieces folded on top of each other and bottom faces of adjacent first connection pieces folded on top of each other alternately.

7. A linear extension and retraction mechanism comprising:
a plurality of connection pieces coupled bendably and provided with a hollow square cross section, the connection pieces being adapted to form a columnar body when constrained from bending; and
an ejection section adapted to form the connection pieces into the columnar body and support the columnar body,
wherein the connection pieces are coupled at an upper part and a lower part of each piece to be folded in a zigzag pattern and stored in a base with top faces of adjacent connection pieces folded on top of each other and bottom faces of adjacent connection pieces folded on top of each other alternately.

8. A linear extension and retraction mechanism comprising:
a plurality of first connection pieces coupled bendably and provided with a U-shaped cross section;
a plurality of second connection pieces coupled bendably and each shaped like a flat plate, a foremost one of the plurality of second connection pieces being connected with a foremost one of the plurality of first connection pieces, the second connection pieces being overlapped on the first connection pieces in upper part of the first connection pieces, thereby a columnar body being formed, the columnar body being released when the first connection pieces and the second connection pieces are separated from each other;
an ejection section adapted to form the columnar body by joining the first connection pieces to the second connection pieces and support the columnar body; and
a winding section adapted to wind up the plurality of first connection pieces around a shaft orthogonal to a center axis of the columnar body.

9. A linear extension and retraction mechanism comprising:
a plurality of connection pieces coupled bendably and provided with a hollow square cross section, the connection pieces being adapted to form a columnar body when constrained from bending;
an ejection section adapted to form the connection pieces into the columnar body and support the columnar body; and
a winding section adapted to wind up the plurality of connection pieces around a shaft orthogonal to a center axis of the columnar body.
